# EUROPÄISCHE PATENTSCHRIFT

(11) **EP 0 762 581 B1**
(45) Veröffentlichungstag und Bekanntmachung des Hinweises auf die Patenterteilung: **07.04.1999**
(21) Anmeldenummer: 96110547.5
(22) Anmeldetag: 29.06.1996
(51) Int. Cl.: H02B 1/20, H02B 1/04

(54) **Vorrichtung zum Befestigen eines elektrischen Gerätes auf einem Adapter**
Device for fastening an electric appliance on an adaptor
Dispositif pour fixer un appareil électrique sur un adaptateur

(30) Priorität: 04.09.1995 CH 2510/95
(43) Veröffentlichungstag der Anmeldung: 12.03.1997
(73) Patentinhaber: Rockwell Automation AG, CH-5001 Aarau (CH)
(72) Erfinder: Rischard, Karl, 5016 Obererlinsbach (CH)
(74) Vertreter: Morva, Tibor

(56) Entgegenhaltungen:
- EP-A- 0 642 197

## Beschreibung

Die vorliegende Erfindung betrifft eine Vorrichtung zum Befestigen eines elektrischen Gerätes auf einem Adapter, wobei das elektrische Gerät mit einem auf eine hutförmige Tragschiene aufrasbaren Klemmfuss versehen und die Tragschiene auf dem Adapter verschieb- und verrastbar befestigt ist, um den Anschluss des elektrischen Gerätes an einem am Adapter fest angeordneten elektrischen Anschluss durch Verschieben der das Gerät zu tragen bestimmten Tragschiene in Anschlussrichtung des elektrischen Gerätes zu erleichtern.

Aus der DE-C1-3922732 ist eine Vorrichtung der eingangs erwähnte Art bekannt. Diese Vorrichtung zum Befestigen eines elektrischen Gerätes auf einem mit Sammelschienen eines Sammelschienensystems verbundenen Adapters weist auf dem Adapter fest angeordnete Anschlüsse für das elektrische Gerät auf. Das elektrische Gerät ist mit Geräteanschlussklemmen und Klemmfuss versehen und auf eine auf einem Abstandsblock befestigte Tragschiene aufschnappbar. Der Abstandsblock selber ist in einer quer zu den Sammelschienen ausgerichteten Führungsaufnahme des Adapters verschieb- und arretierbar angeordnet. Der Abstand zwischen den am Adapter fest angebrachten Anschlusskontakten und der Führungsaufnahme ist dem maximalen Abstand zwischen der Führungsaufnahme und den Geräteanschlussklemmen angepasst. Mit unterschiedlich hohen Abstandsblöcken ist es erreichbar, dass die Geräteanschlussklemmen unterschiedlich grossen Geräte und die am Adapter fest angeordneten Anschlusskontakte immer auf der gleichen Höhe liegen, wobei durch Verschieben des auf dem Abstandsblock aufgeschnappten Gerätes in Richtung der Anschlusskontakte die Geräteanschlussklemmen mit den Anschlusskontakten in elektrische Verbindung gebracht werden können. Ein Nachteil dieser Anordnung besteht darin, dass der Adapter mit einer Führungsaufnahme hergestellt werden muss, um den mit einer Tragschiene versehenen Abstandsblock verschieb- und arretierbar auf disem Adapter befestigen zu können. Dieser Adapter ist nicht nachrüstbar mit einer verschieb- und arretierbaren Tragschiene. Dass dieser Adapter nicht nachrüsbar ist, ist auch daraus ersichtlich, dass die für die Arretierung erforderlichen Rastzähne im Adapterkörper selber schon bei der Herstellung angeformt werden müssen. Durch den fest gewählten Abstand zwischen der Führungsaufnahme des Adapters und den am Adapter liegenden Anschlusskontakten ist die Verwendung des Adapters nur bis zu einer für den Adapter vorgesehenen, maximalen Gerätegrösse möglich. Die Geräteanschlussklemmen dürfen bei dieser Anordnung nicht höher liegen als die festen Anschlusskontakte am Adapter, sonst ist der Anschluss der Geräteanschlussklemmen durch Zuschieben des Gerätes an die Anschlusskontakte nicht mehr möglich. Ausserdem muss für jede Grätegrösse ein geeigneter Abstandblock vorhanden sein. Zwischen dem Abstandsblock und den im Adapterkörper angeformten Rastzähnen ist ein für die Lösung der Arretierung schlecht zugänglicher Arretierungskörper vorgesehen. Diese Arretierung muss sowohl bei einer in Anschlussrichtung des elektrischen Gerätes durchzuführenden Vorwärtsbewegung des Abstandsblockes als auch bei einer Rückwärtsbewegung während der ganzen Bewegung gelöst gehalten werden. Der Abstandsblock ist auf dem Adapter in beiden Richtungen lösbar verrastet.

Aus der DE-U1-9107327 ist ein weiterer Sammelschienenadapter bekannt. An diesem Sammelschienenadapter ist ein mit der internen Verdrahtung der auf dem Adapter befestigten Geräte verbundener Steckanschluss für die externen Zu- und/oder Ableitungen befestigt. Der Nachteil dieser Anordnung besteht darin, dass der Sammelschienenadapter schon bei der Fertigung für die Befestigung des Steckanschlusses vorgesehen werden muss. Dieser Adapter ist nur dann nachrüstbar, wenn der Adapter selber eine besondere Ausbildung für die Aufnahme eines Steckanschlusses aufweist. Im weiteren ist der für diese Anordnung vorgesehene Steckanschluss in Längsrichtung des Sammelschienenadapters steckbar, so dass die Einhaltung eines für eine Schaltanlage vorgesehenen Rasters wegen zusätzlichem Platzbedarf des Steckers nicht mehr möglich ist. Ausserdem ist die Montage dieses Steckanschlusses auf den Adapter mit einem verhältnismässig grossen Aufwand verbunden.

Die Aufgabe der vorliegenden Erfindung ist es, eine Vorrichtung der eingangs erwähnten Art zu entwickeln, die mit einer verschieb- und verrastbaren Tragschiene mit einfachen Mitteln nachrüstbar ist, für die Befestigung unterschiedlicher Gerätegrössen uneingeschränkt verwendbar ist und eine bei der Herstellung der Anschlüsse des auf der Tragschiene befestigten Gerätes und bei dessen lösbarer Verrastung einfach bedienbare Verrastung aufweist.

Die gestellte Aufgabe ist dadurch gelöst, dass ein mit dem Adapter rastierend in formschlüssige Verbindung bringbares Lagerteil vorgesehen ist, das parallel zueinander angeordnete, in Schieberichtung der Tragschiene verlaufende Führungen aufweist und dass die Tragschiene an ihrer Unterseite mit die Führungen am Lagerteil hintergreifenden fussartigen Ansätzen versehen ist, die ein Verschieben der Tragschiene auf dem Lagerteil ermöglichen und dass zwischen der Tragschiene und dem Lagerteil eine bei angeschlossenem elektrischen Gerät mindestens in der der Anschlussrichtung abgekerten Richtung wirksame, lösbare Verrastung vorgesehen ist. Der Adapter ist mit dem Lagerteil einfach, durch Einschnappen der formschlüssigen Verbindungen nachrüstbar. Sobald das Lagerteil in den Adapter eingesetzt und dort verrastet ist, kann die dafür vorgeshene Tragschiene mit ihren fussartigen Ansätzen hinter die am Lagerteil ausgebildeten Führungen hineingeführt werden. Der Anschluss des auf die verschiebund verrastbare Tragschiene aufgeschnappten Gerätes an einem anderen, am Adapter unverschiebbar befestigten elektrischen Gerät oder Anschlusstelle erfolgt nach Vorbereitung der Verbindungsleitungen durch Zuschieben und Verrasten des verschiebbaren Gerätes in die gewünschten Position, wo die Verbindungsleitungen angeschlossen werden können. Die Verbindungsleitungen der miteinander zu verbindenden Geräte sind an jeder über dem Adapter messbaren Höhe der beiden Anschlüsse anpassbar. Somit ist die Vorrichtung für die unterschiedlichsten Gerätegrössen verwendbar.

Gemäß einer Ausgestaltung der Erfindung um das Zuschieben des Gerätes zu seiner Anschlussstelle zu vereinfachen und zugleich eine sichere aber lösbare Verrastung des Gerätes in der Betriebsstellung zu erreichen, ist die Verrastung zwischen der Tragschiene und dem Lagerteil in Anschlussrichtung unwirksam und in der Gegenrichtung wirksam aber lösbar.

Im Lagerteil kann vorteilhafterweise nach einer weiteren Ausgestaltung der Erfindung ein sich in Verschieberichtung der Tragschiene erstreckendes, blattfederartiges Element mit mehreren an ihren der Anschlussrichtung des elektrischen Gerätes zugekehrten Seiten steile, im wesentlichen zur Verschieberichtung senkrechte und in der Gegenrichtung schräge Flanken aufweisenden Rastzähnen gelagert sein, wobei die Rastzähne mit mindestens einem an der Unterseite der Tragschiene angeformten, mindestens an seiner der Anschlussrichtung des elektrischen Gerätes abgekehrten Seite eine steile, im wesentlichen zur Verschieberichtung sekrechte Flanke aufweisenden Rastvorsprung in lösbare Wirkverbindung bringbar sind. Durch Zusammenwirken der Rastzähne und der Rastvorsprünge, wobei die Rastzähne in Einschieberichtung der fussartigen Ansätze der Tragschiene orientiert sind, ist sichergestellt, dass das verschiebbar gelagerte elektrische Gerät durch einfaches Verschieben in seine Kontaktstellung mit dem anderen Gerät überführt werden kann, hingegen eine entgegengesetzte Bewegung gesperrt ist. Die Blockierung in dieser Richtung wird erst dann aufgehoben, wenn die Blattfeder durch Hinunterdrücken ihres Betätigungsbereiches aus dem Rastweg der Rastvorsprünge des Tragelementes herausbewegt wird. Der Betätigungsbereich der Blattfeder ist gut zugänglich.

Die beiden am Lagerteil vorhandenen Führungen können mit Vorteil unterschiedliche Dicken und die an der Tragschiene vorhandenen fussartigen Ansätze komplementär unterschiedliche Oeffnungsweiten aufweisen, damit die Tragschiene nur in einer Lage auf das Lagerteil passt. Durch diese Massnahme wird verhindert, dass eine Tragschiene in einer um 180° verkehrte Lage auf das Lagerteil aufgeschoben werden kann.

Am Lagerteil kann durch eine formschlüssige Steckverbindung ein für die Befestigung eines elektrischen Anschlussteckers vorgesehenes Anschlussteckertragelement befestigbar sein. Die mechanische Steckverbindung von Anschlusstecker und Lagerteil lässt sich besonders einfach bewerkstelligen, wenn ein separates Anschlussteckertragelement vorgesehen ist, das in das Lagerteil einsteckbar ist. Zweckmässig ist das eine Anschlussteckerteil gleichfalls mittels einer Steckverbindung mit dem Anschlussteckertragelement verbindbar. Es ergibt sich dadurch eine besonders einfache Handhabung des Anschlussteckers und der mit diesem zusammenwirkenden Komponenten. Es werden die elektrisch leitenden Verbindungen zwischen elektrischem Gerät und dem einen Anschlussteckerteil hergestellt, ferner die elktrisch leitenden Verbindungen zwischen einer externen Einheit und dem anderen Anschlussteckerteil. Verbunden werden die Anschlusssteckerteile durch Ineinanderstecken.

Eine konkrete Ausgestaltung des Anschlusssteckertragelementes sieht vor, dass dieses eine mit Bohrungen versehene Tragplatte aufweist, wobei die Bohrungen für die Aufnahme komplementär ausgebildeter Raststifte des einen Anschlusssteckerteiles vorgesehen sind. Die Bohrungen sind für die Raststifte von einfachen, handelsüblichen Anschlusstecker vorbereitet.

Das Anschlussteckertragelement selbst weist zweckmässig zwei parallel zueinander angeordnete stabförmige Ansätze zum Einschieben in das Lagerteil auf. Deren Länge sollte so bemessen sein, dass eine ausreichend exakte Führung und damit insbesondere kippstabile Lagerung des Anschlussteckertragelemtes im Lagerteil sichergestellt ist. Als Sicherung ist der jeweilige Ansatz zweckmässig mit einer Rastausnehmung versehen, die in Wirkverbindung mit mindestens einer Rastnase des Lagerteils bringbar ist.

Im folgenden wird anhand der beiliegenden Zeichnungen ein Ausführungsbeispiel der Erfindung näher beschrieben. Es zeigen:
- Fig.1: eine Explosionsdarstellung eines Adapters, verdeutlicht ohne die für die Erfindung wesentlichen Details, wobei dieser Adapter mit Sammelschienen eines elektrischen Sammelschienensystems verbindbar ist,
- Fig.2: eine räumliche Ansicht eines Lagerteiles,
- Fig.3: eine räumliche Ansicht einer Tragschiene,
- Fig.4: eine räumliche Ansicht eines Anschlussteckertragelementes,
- Fig.5: eine Explosionsdarstellung der in den Figuren 1 bis 4 gezeigten wesentlichen Teile,
- Fig.6: eine räumliche Ansicht des Adapters mit eingesetztem Lagerteil, mit Tragschiene und mit Anschlussteckertragelement sowie eines für Wandmontage vorgesehenen Adapterunterteils.

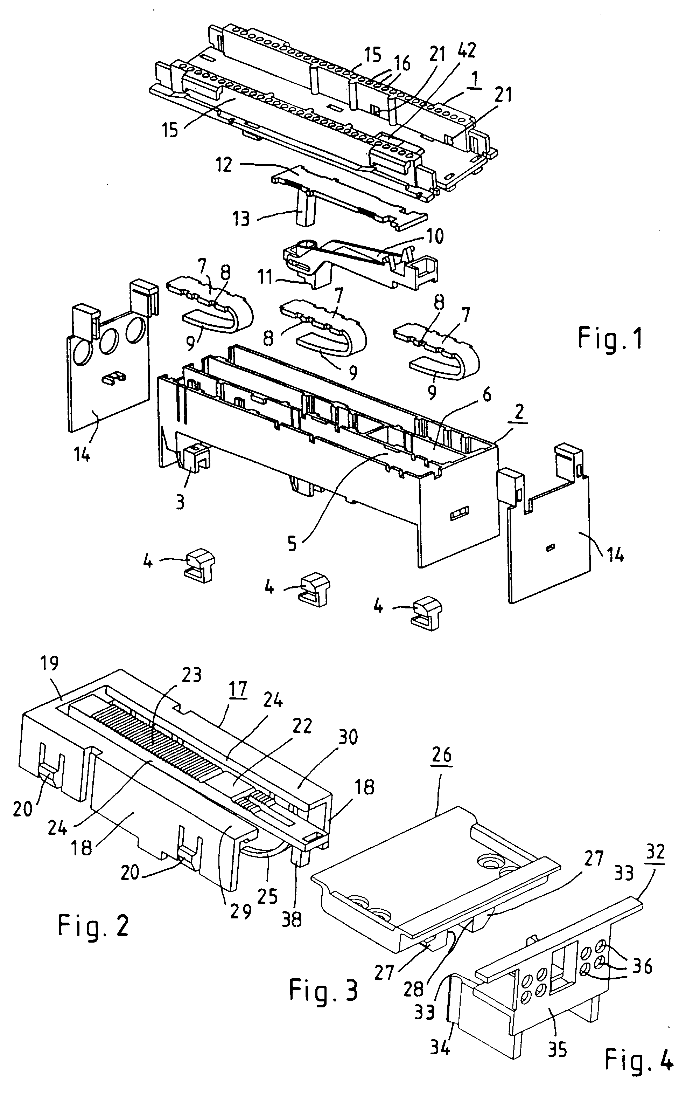

Fig.1 verdeutlicht den grundsätzlichen Aufbau eines Adapters, wobei in diesen Darstellungen diejenigen Bauteile, die sich auf das Lagerteil, auf die Tragschiene und auf das Anschlussteckertragelement beziehen, weggelassen worden sind.

In Fig.1 ist veranschaulicht, dass die ganze Anordnung bis auf deren für die Stromleitung erforderlichen Bauteile aus Kunststoff besteht, ein kastenförmiges Adapterunterteil 2 und einen im wesentlichen plattenförmig ausgebildeten Adapter 1 aufweist. Das Adapterunterteil 2 ist an seiner Unterseite mit drei Kontaktfüssen 3 versehen, von denen nur ein sichtbar ist. Die Kontaktfüsse 3 hintergreifen drei senkrecht zur Längserstreckung des Adapters 1 angeordnete, nicht gezeigte Sammelschienen in bekannter Art und Weise. Damit der Adapterunterteil 2 für die unterschiedlichsten Sammelschienenstärken Verwendung finden kann, sind Distanzstücke 4 vorgesehen, die auf die Kontaktfüsse 3 aufschiebbar sind. Das Adapterunterteil 2 weist zwei Trennstege 5 und 6 auf, die das Adapterunterteil 2 in drei Längskammern unterteilen. In jede Längskammer ist eine Kontaktfeder 7 eingesetzt und über deren profilierte Abschnitte 8 im Adapterunterteil 2 gehalten. Der nicht profilierte, andere Schenkel 9 der jeweiligen Kontaktfeder 7 liegt bei auf die Sammelschienen aufgestecktem Adapterunterteil 2 an der zugeordneten Sammelschiene an. Auf das freie Ende des profilierten Abschnittes 8 der jeweiliegen Kontaktfeder 7 ist eine Steckverbindung aufsteckbar, die mit einer elektrischen Leitung verbunden ist, die zu einem elektrischen Gerät führt. Diese vorgenannten elektrischen Komponenten sind nicht gezeigt. In der mittleren Kammer des Adapterunterteiles 2 ist schliesslich ein Betätigungshebel 10 gelagert, der ein treppenförmiges Rastelement 11 aufnimmt. Eine in den beiden Trennstegen 5 und 6 gelagerte Abdeckplatte 12 deckt den Betätigungshebel 10 ab und ist im Bereich seines dem Rastelement 11 zugewandten Endes mit einem Führungszapfen 13 versehen, der das Rastelement 11 durchsetzt und damit führt. Das treppenförmige Rastelement 11 gestattet es, die mittlere Sammelschiene zwischen diesem und dem zugeordneten Kontaktfuss 3 festzulegen, wobei der Abstand der Stufen des Rastelementes 11 auf mögliche Sammelschienenbreiten abgestimmt ist. Nicht gezeigt ist eine das Rastelement in Sammelschienenrichtung drückende Feder. Auf das komplettierte Adapterunterteil 2 ist der Adapter 1 aufgeschoben, der in diesem Zustand mit dem Adapterunterteil 2 rastiert. Um ein unbeabsichtigtes Berühren der stromführenden Sammelschienen auszuschliessen, ist im Bereich jeder der beiden Stirnseiten des Adapterunterteiles 2 ein plattenförmiger Uebergreifschutz 14 vorgesehen, der auf das Adapterunterteil 2 und den Adapter 1 aufsteckbar ist. Der Adapter 1 weist in dessen Längsrichtung zwei benachbart zu den Längskanten des Adapters 1 verlaufende, parallele Stege 15 mit Lochreihen auf, wobei die einzelnen Löcher mit der Bezugsziffer 16 bezeichnet sind.

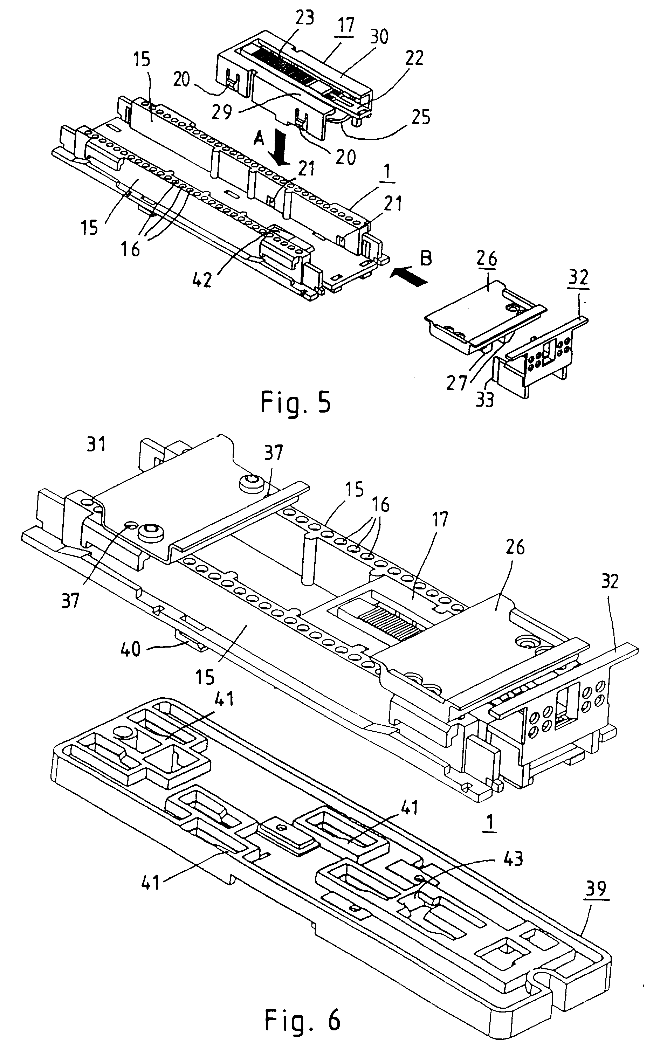

In Fig.2 ist ein Lagerteil 17 ersichtlich. Das blockartig ausgebildete Lagerteil 17 weist Seitenwände 18 sowie eine diese verbindende, unterbrochene Deckplatte 19 auf. Die Breite des Lagerteiles 17 entspricht dem Abstand der beiden Stege 15 des Adapters 1 und im übrigen entspricht im Einsteckbereich des Lagerteiles 17 auch dessen seitliche Profilierung der Profilierung der Stege 15 in ihrem dem Lagerteil 17 zugeordneten Bereich. Das Lagerteil 17 wird von oben auf den Adapter 1 aufgesteckt, wie in Fig.5 der Pfeil A es andeutet, wobei beidseitig des Lagerteiles 17 angeordnete Rastnasen 20 in Rastausnehmungen 21 der Stege 15 eingreifen. Aufgrund dieser rastierenden Verbindung und der Profilierung von Lagerteil 17 und Stegen 15 ist das Lagerteil 17 fest mit dem Adapter 1 verbunden. Die U-förmig ausgebildete Deckplatte 19 des Lagerteiles 17 nimmt im Bereich ihres Verbindungssteges ein sich in Längsrichtung des Adapters 1 erstreckendes, blattfederartiges Element 22 auf, das auf seiner dem Adapter 1 abgewandten Seite eine Vielzahl quer verlaufender Rastzähne 23 aufweist. Die Rastzähne 23 weisen an ihren der Anschlussrichtung des elektrischen Gerätes zugekehrten Seiten steile, im wesentlichen zur Verschieberichtung der Tragschiene 26 senkrechte und in der Gegenrichtung schräge Flanken auf. Diese Anordnung ermöglicht das ungehinderte Verschieben des Lagerteils mit dem elektrischen Gerät in Anschlussrichtung und dessen Verrastung in der Gegenrichtung, wobei die Verrastung lösbar ist. Die Breite des blattfederartigen Elementes 22 ist so bemessen, dass beidseitig dieses Elementes ein Spalt 24 zur Deckplatte 19 verbleibt, wobei die beiden Spalte 24 parallel zur Längserstreckung des Lagerteils 17 verlaufen. Das blattfederartige Element 22 ist durch eine Feder 25 in der Eingriffstellung der Rastzähne 23 gehalten. Der Anschlag 38 verhindert eine übermässige Durchbiegung des blattfederartigen Elementes 22.

Im Lagerteil 17 ist die in Fig.3 sichtbare Tragschiene 26 verschieblich gelagert, die an ihrer Unterseite vier fussartige Ansätze 27 aufweist. In der Figur 3 sind nur die beiden vorderen Ansätze 27 sichtbar, die beiden hinteren Ansätze sind durch die Tragschiene 26 verdeckt. Die Montage der Tragschiene 26 erfolgt, indem diese in Richtung des Pfeiles B (Fig.5) an der offenen Seite des Lagerteils 17 in dieses eingeschoben wird, wobei die Schenkel 28 der fussartigen Ansätze 27 die zwischen den Deckplattenabschnitten 29 und 30 gebildeten Spalte 24 durchsetzen und hierbei die eigentlichen Füsse der Ansätze 27 in die Deckplattenabschnitte 29 und 30 spielfrei hintergreifen. Die Deckplattenabschnitte 29 und 30 sind unterschiedlich dick und die fussartigen Ansätze 27 weisen komplementär unterschiedliche Oeffnungsweiten auf, so dass die Tragschiene 26 nur in einer Lage auf das Lagerteil 17 passt. Ein um 180° verkehrtes Aufsetzen der Tragschine 26 auf das Lagerteil 17 ist durch diese Massnahme verunmöglicht. Nicht gezeigt sind an der dem Lagerteil 17 zugewandten Seite der Tragschiene 26 angeordnete Rastvorsprünge, die einfach kammartig mit an beiden verrastwirksamen Seiten steilen, im wesentlichen zur Verschieberichtung der Tragschiene 26 senkrechten Flanken ausgebildet sind und mit den Rastzähnen 23 des blattfederartigen Elementes 22 zusammenwirken. Die Rastzähne 23 des blattfederartigen Elementes 22 sind so orientiert, dass ein Verschieben der Tragschiene 26 in Richtung der auf dem Adapter 1 fest montierten Tragschiene 31 (Fig.6) möglich ist, nicht aber ein Verschieben der Tragschiene 26 in der entgegengesetzten Richtung. Um dies trotzdem zu ermöglichen, muss das blattfederartiges Element 22 im Bereich seines freien Enden gegen die Kraft der Feder 25 nach unten verschwenkt werden, womit die Rastzähne 23 ausser Eingriff mit den Rastvorsprüngen der Tragschiene 26 gelangen. Mit der Tragschiene 26 ist ein elektrisches Gerät, beispielsweise ein Schütz verbunden.

Aufgrund der Lagerung der Tragschiene 26 im Lagerteil 17 kann das auf dieser Tragschiene 26 montierte elektrische Gerät nach dem Montieren des anderen elektrischen Gerätes auf der fest montierten Tragschiene 31 auf einfache Art und Weise mit dem anderen Gerät elektrisch leiten verbunden werden, indem es zusammen mit der Tragschiene 26 auf dem Lagerteil 17 geschoben wird, bis mit dem Gerät verbundene Kontaktstifte in entsprechend angeordnete Kontaktöffnungen des auf die Tragschiene 31 fest montierten anderen Gerätes eingeschoben werden. Die beiden Geräte sind damit dauerhaft elektrisch leitend verbunden und verrastet.

Das Lagerteil 17 kann in seinem dem Ende des Adapters 1 zugekehrten Bereich einen Anschlusstecker aufnehmen. Hierzu ist ein Anschlussteckertragelement 32 mit zwei parallel zueinander angeordneten stabförmigen Ansätzen 33 versehen, deren äusserer Führungsabstand dem Abstand der beiden Seitenwände 18 des Lagerteiles 17 und die Höhe des jeweiligen Ansatzes 33 dem lichten Abstand unter dem Deckplattenabschnitt 29 bzw. 30 im Lagerteil 17 entspricht. Um das in das Lagerteil 17 eingeschobene Anschlussteckertragelement 32 dauerhaft im Lagerteil 17 zu fixieren, weist jeder Ansatz 33 aussen eine Rastvertiefung 34 auf, die in eingeschobener Stellung mit einem nicht gezeigten Rastvorsprung des Lagerteiles 17 zusammenwirkt. Der nicht dargestellte, handelsübliche Anschlussstecker ist mittels einer Steckverbindung in dem in das Lagerteil 17 eingesteckten Anschlussteckertragelement 32 gehalten. Hierzu weist das Anschlusssteckertragelement 32 eine mit den beiden Ansätzen 33 verbundene Tragplatte 35 auf, die mit Bohrungen 36 versehen ist. Das Anschlussteckerteil ist mit einer Vielzahl von komlementär zu den Bohrungen 36 ausgebildeten Raststiften versehen. Das Anschlussteckerteil kann einfach durch Anstecken an der Tragplatte 35 gehalten werden. Nicht gezeigt ist in den Figuren die elektrische Verkabelung des mit der Tragschiene 26 befestigten elektrischen Grätes mit dem Anschlussteckerteil und die vom Gegenstück zu einem externen Ausgang führenden Kabel.

Fig.5 zeigt deutlich, wie bereits beschrieben wurde, wie das Lagerteil 17 in den Adapter 1 in Richtung des Pfeiles A eingesetzt wird. Beim montierten Lagerteil 17 greifen die am Lagerteil 17 angeformten Rastnasen 20 in die Rastausnehmungen 21 des Adapters 1 ein. Die Tragschiene 26 wird in Richtung des Pfeiles B in das montierte Lagerteil 17 hineingeschoben, bis die Rastzähne 23 des blattfederartigen Elementes 22 mit den in den Figuren nicht sichtbaren Rastvorsprüngen an der Unterseite der Tragschiene 26 in Eingriff kommen. Die gebogenne Feder 25 steht am Boden des Adapters 1 an und sorgt dafür, dass die Rastzähne 23 mit den Rastvorsprüngen der Tragschiene 26 unter Druck in Eingriff bleiben. Das Anschlussteckertragelement 32 wird anschliessend in Richtung des Pfeiles B in das Lagerteil 17 hineingeschoben, wo es verrastet.

Fig.6 zeigt den Adapter 1 mit montiertem Lagerteil 17 und angeschraubter, fester Tragschiene 31. Im Bereich eines Endes der Stege 15 ist die Tragschiene 31 mit den beiden Stegen 15 verbunden. Die Tragschiene 31 weist hutförmiges Profil auf und ist etwa so lang wie der Adapter 1 breit ist. Die Tragschiene 31 weist im Bereich ihres Mittelsteges vier Bohrungen 37 auf, wobei jeweils zwei Bohrungen 37 einer Lochreihe zugeordnet sind, damit die Befestigung der Tragschiene 31 über vier Schrauben in den entsprechenden Löchern 16 der Lochreihen grundsätzlich an beliebiger Stelle des Adapters 1 erfolgen kann. Die Schrauben schneiden sich dabei in die jeweiligen Löchern 16 der Lochreihen ein. Die Tragschiene 31 dient der Befestigung eines nicht gezeigten elektrischen Gerätes, beispielsweise eines Schützes, Leistungsschalters, usw.. Das anzuschliessende elektrische Gerät weist an seiner Unterseite einen komplementär zum Profil der Tragschiene 31 gestalteten Schnappfuss auf. Der komplettierte Adapter 1 wird bei Bedarf auf ein für Wandmontage vorgesehenes, in der unteren Hälfte der Fig.6 dargestelltes Adapterunterteil 39 aufgeschoben und dort in der aufgeschobenen Endstellung verrastet. Beim Aufschieben des Adapters 1 auf des Adapterunterteil 39 hintergreifen die Befestigungsfüsse 40, wovon in Fig.6 nur ein sichtbar ist, die am Adapterunterteil 39 angeformten Vorsprünge 41. Die Verrastung des Adapters 1 auf dem Adapterunterteil 39 in der aufgeschobenen Endstellung erfolgt durch die in den Figuren 1 und 5 sichtbare federnde Zunge 42, die an der Zwischenwand 43 des Adapterunterteils 39 verrastet.

## Patentansprüche

1. Vorrichtung zum Befestigen eines elektrischen Gerätes auf einem Adapter (1), wobei das elektrische Gerät mit einem auf eine hutförmige Tragschiene (26) aufrasbaren Klemmfuss versehen und die Tragschiene (26) auf dem Adapter (1) verschieb- und verrastbar befestigt ist, um den Anschluss des elektrischen Gerätes an einem am Adapter (1) fest angeordneten elektrischen Anschluss durch Verschieben der das Gerät zu tragen bestimmten Tragschiene (26) in Anschlussrichtung des elektrischen Gerätes zu erleichtern, **dadurch gekennzeichnet, dass** ein mit dem Adapter (1) rastierend in formschlüssige Verbindung bringbares Lagerteil (17) vorgesehen ist, das parallel zueinander angeordnete, in Schieberichtung (B) der Tragschiene (26) verlaufende Führungen (29, 30) aufweist und dass die Tragschiene (26) an ihrer Unterseite mit die Führungen (29, 30) am Lagerteil (17) hintergreifenden fussartigen Ansätzen (27) versehen ist, die ein Verschieben der Tragschiene (26) auf dem Lagerteil (17) ermöglichen und dass zwischen der Tragschiene (26) und dem Lagerteil (17) eine bei angeschlossenem elektrischen Gerät mindestens in der der Anschlussrichtung abgekerten Richtung wirksame, lösbare Verrastung vorgesehen ist.

2. Vorrichtung nach Anspruch 1, **dadurch gekennzeichnet, dass** die zwischen der Tragschiene (26) und dem Lagerteil (17) vorgesehene, lösbare Verrastung beim Verschieben der Tragschiene (26) auf dem Lagerteil (17) in Anschlussrichtung unwirksam und in Gegenrichtung wirksam ist.

3. Vorrichtung nach Anspruch 2, **dadurch gekennzeichnet, dass** im Lagerteil (17) ein sich in Verschieberichtung (B) der Tragschiene (26) erstreckendes, blattfederartiges Element (22) mit mehreren an ihren der Anschlussrichtung des elektrischen Gerätes zugekehrten Seiten steile, im wesentlichen zur Verschieberichtung senkrechte und in der Gegenrichtung schräge Flanken aufweisenden Rastzähnen (23) gelagert ist, wobei die Rastzähne (23) mit mindestens einem an der Unterseite der Tragschiene (26) angeformten, mindestens an seiner der Anschlussrichtung des elektrischen Gerätes abgekehrten Seite eine steile, im wesentlichen zur Verschieberichtung sekrechte Flanke aufweisenden Rastvorsprung in lösbare Wirkverbindung bringbar sind.

4. Vorrichtung nach Anspruch 1, **dadurch gekennzeichnet, dass** die beiden am Lagerteil (17) vorhandenen Führungen (29, 30) unterschiedliche Dicken und die an der Tragschiene (26) vorhandenen fussartigen Ansätze (27) komplementär unterschiedliche Oeffnungsweiten aufweisen, damit die Tragschiene (26) nur in einer Lage auf das Lagerteil (17) passt.

5. Vorrichtung nach einem der Ansprüche 1 bis 4, **dadurch gekennzeichnet, dass** am Lagerteil (17) durch eine formschlüssige Steckverbindung ein für die Befestigung eines elektrischen Anschlussteckers vorgesehenes Anschlussteckertragelement (32) befestigbar ist.

6. Vorrichtung nach Anspruch 5, **dadurch gekennzeichnet, dass** das Anschlusssteckertragelement (32) eine mit Bohrungen (36) versehene Tragplatte (35) aufweist, wobei die Bohrungen (36) für die Aufnahme komplementär ausgebildete Raststifte des einen Anschlussteckerteiles vorgesehen sind.

7. Vorrichtung nach Anspruch 5 oder 6, **dadurch gekennzeichnet, dass** das Anschlussteckertragelement (32) zwei parallel zueinander angeordnete stabförmige Ansätze (33) zum Einschieben in das Lagerteil (17) aufweist.

8. Vorrichtung nach Anspruch 7, **dadurch gekennzeichnet, dass** der jeweilige Ansatz (33) mit einer Rastausnehmung (34) versehen ist, die in Wirkverbindung mit mindestens einer Rastnase des Lagerteils (17) bringbar ist.

## Claims

1. Device for fastening an electrical appliance on an adapter (1) wherein the electrical appliance is provided with a clamping foot which is latchable onto a hat-shaped support rail (26) and the support rail (26) is mounted on the adapter (1) in displaceable and latchable manner in order to facilitate the connection of the electrical appliance to an electrical terminal fixed on the adapter (1) by displacing the support rail (26) that is being used to support the appliance in the direction required for the connection of the electrical appliance, characterised in that, there is provided a support member (17) which can be placed in interlocking contact with the adapter (1) in latching manner and which comprises mutually parallel guide means (29, 30) extending in the direction (B) in which the support rail (26) is displaced, and that the support rail (26) is provided on its lower face with foot-like lugs (27) which grip behind the guide means (29, 30) on the support member (17) and enable the support rail (26) to be displaced on the support member (17), and that a releasable latching means is provided between the support rail (26) and the support member (17), said latching means being effective, when the electrical appliance is connected, in at least that direction which is opposed to said direction of connection.

2. Device in accordance with Claim 1, characterised in that the releasable latching means provided between the support rail (26) and the support member (17) is ineffective when displacing the support rail (26) on the support member (17) in said direction of connection, but is effective in the reverse direction.

3. Device in accordance with Claim 2, characterised in that a leaf-spring-like element (22) extending in the direction (B) in which the support rail (26) is displaced is mounted in the support member (17), said element comprising a plurality of latching teeth (23) which, on the sides thereof facing in said direction for the connection of the electrical appliance, have edges that are steeply inclined, being substantially perpendicular to the direction of displacement but, on the sides thereof in the opposite direction, the edges are slanting, whereby the latching teeth (23) are adapted to co-operate in releasable manner with at least one latching projection which is integral with the lower surface of the support rail (26) and the edge of which is steeply inclined, being substantially perpendicular to the direction of displacement, at least on the side thereof opposed to said direction for the connection of the electrical appliance.

4. Device in accordance with Claim 1, characterised in that the two guide means (29, 30) on the support member (17) have different thicknesses and the foot-like lugs (27) on the support rail (26) incorporate complementary openings of different width so that the support rail (26) can adopt only one position on the support member (17).

5. Device in accordance with any of the Claims 1 to 4, characterised in that a terminal plug support element (32) provided for the mounting of an electrical terminal plug is mounted on the support member (17) by means of an interlocking plug-in connection.

6. Device in accordance with Claim 5, characterised in that the terminal plug support element (32) comprises a support plate (35) provided with borings (36) wherein the borings (36) are provided for accommodating complementary latching pins of the one terminal plug member.

7. Device in accordance with Claim 5 or 6, characterised in that the terminal plug support element (32) comprises two mutually parallel bar-like lugs (33) for insertion into the support member (17).

8. Device in accordance with Claim 7, characterised in that each respective lug (33) is provided with a latching groove (34) which is adapted to co-operate with at least one latching catch on the support member (17).

## Revendications

1. Dispositif pour fixer un appareil électrique sur un adaptateur (1), l'appareil électrique étant doté d'un pied de serrage, pouvant être monté par encliquetage sur une barre support (26) en forme de chapeau, et la barre support (26) étant fixée avec possibilité de coulissement et d'encliquetage sur l'adaptateur (1), afin de faciliter le raccordement de l'appareil électrique à un organe de raccordement électrique, disposé rigidement sur l'adaptateur (1), par déplacement dans la direction de raccordement de l'appareil électrique de la barre support (26) conçue pour porter l'appareil,
caractérisé en ce qu'
une partie formant palier (17), susceptible d'être reliée avec ajustement de forme, avec encliquetage, à l'adaptateur (1) est prévue, et présente des guidages (29, 30) disposés parallèlement entre eux, s'étendant dans la direction de coulissement (B) de la barre support (26), et en ce que la barre support (26) est dotée sur sa face inférieure d'appendices (27) de type pied, saisissant par l'arrière les guidages (29, 30) réalisés sur la partie formant palier (17), appendices qui permettent un coulissement de la barre support (26) sur la partie formant palier (17), et en ce qu'entre la barre-support (26) et la partie formant palier (17) est prévu un organe d'encliquetage désolidarisable, agissant lorsque l'appareil électrique est raccordé, au moins dans la direction opposée à la direction de raccordement.

2. Dispositif selon la revendication 1,
caractérisé en ce que
l'organe d'encliquetage désolidarisable, prévu entre la barre support (26) et la partie formant palier (17), agit lors du coulissement de la barre support (26) sur la partie formant palier (17), d'une façon inefficace lorsque l'on se déplace dans la direction de raccordement et d'une façon efficace lorsque l'on se déplace dans la direction inverse.

3. Dispositif selon la revendication 2,
caractérisé en ce que
dans la partie formant palier (17) est monté un élément (22) du genre à ressort à lame, s'étendant dans la direction de déplacement (B) de la barre support (26), doté de plusieurs dents d'encliquetage (23), inclinées de façon raide sur leurs faces tournées dans la direction de raccordement de l'appareil électrique, sensiblement perpendiculaires par rapport à la direction de déplacement et présentant des flancs inclinés dans la direction inverse, les dents d'encliquetage (23) étant susceptibles d'être mises en liaison fonctionnelle désolidarisable avec au moins une saillie d'encliquetage, formée d'un seul tenant sur la face inférieure de la barre support (26), présentant, au moins sur sa face opposée à la direction de raccordement de l'appareil électrique, un flanc incliné de façon raide, sensiblement perpendiculaire par rapport à la direction de déplacement.

4. Dispositif selon la revendication 1,
caractérisé en ce que
les deux guidages (29, 30) existants sur la partie formant palier (17) présentent des épaisseurs différentes et les appendices (27) de type pied existant sur la barre support (26) présentent des tailles d'ouverture différentes, complémentaires, afin que la barre support (26) ne s'adapte que dans une position sur la partie formant palier (17).

5. Dispositif selon l'une quelconque des revendications 1 à 4,
caractérisé en ce que
sur la partie formant palier (17) peut être fixé au moyen d'une liaison à enfichage à ajustement de forme un élément support de connecteur de raccordement (32), prévu pour assurer la fixation d'un organe d'enfichage de raccordement électrique.

6. Dispositif selon la revendication 5,
caractérisé en ce que
l'élément support de connecteur de raccordement (32) présente une plaque support (35) dotée de perçages (36), les perçages (36) étant prévus pour recevoir des tiges d'encliquetage de configuration complémentaire, appartenant à l'une des parties d'enfichage de raccordement.

7. Dispositif selon la revendication 5 ou 6,
caractérisé en ce que
l'élément support de connecteur de raccordement (32) présente deux appendices (33) réalisés sous forme de barre, disposés parallèlement l'un à l'autre, destinés à être insérés dans la partie formant palier (17).

8. Dispositif selon la revendication 7,
caractérisé en ce que
l'appendice (33) respectif est doté d'un logement d'encliquetage (34) qui peut être relié fonctionnellement à au moins un ergot d'encliquetage de la partie formant palier (17).
